# DEMANDE DE BREVET EUROPEEN

(11) **EP 1 145 938 A1**
(43) Date de publication de la demande: **17.10.2001**
(21) Numéro de dépôt: 00107767.6
(22) Date de dépôt: 11.04.2000
(51) Int. Cl.: B62D 33/02

(54) **Rehausse de montant pour le rehaussement de la caisse de camions, remorques et semi-remorques**

(71) Demandeur: Frizzo, Scolastica, 36070 Trissino (Vincenza) (IT)
(72) Inventeur: Frizzo, Scolastica, 36070 Trissino (Vincenza) (IT)
(74) Mandataire: Bettello, Pietro, Dott. Ing.

(57) **Abrégé**

Rehausse de montant pour le rehaussement de la caisse de camions, remorques et semi-remorques, destinée à s'ancrer, par sa partie inférieure, sur ladite caisse et apte à soutenir au moins une traverse ou lame horizontale, ladite rehausse comprenant au moins un étrier de support des traverses ou lames, caractérisée en ce que les étriers (5) de support des traverses ou lames (4) sont ancrés au corps de la rehausse de montant de façon amovible, au moyen d'un accrochage mobile.

## Description

L'invention concerne la réalisation d'une rehausse de montant à utiliser pour le rehaussement des caisses de camions, remorques et semi-remorques, selon le préambule de la revendication 1.

Aussi bien dans les camions que dans les remorques des ensembles routiers et des semi-remorques, destinés au transport de marchandises diverses et en vrac, le volume de la caisse, définie par le plateau et par les ridelles, est augmenté au moyen de ladite opération de "rehaussement".

Cette opération consiste à réaliser au-dessus des ridelles, une structure réticulaire constituée par des éléments transversaux, les traverses ou lames, qui relient des longerons verticaux appelés rehausses de montants, parce qu'ils s'ancrent par leur partie inférieure sur un montant correspondant qui peut soutenir la ridelle et en constitue le prolongement.

Les traverses ou lames horizontales sont soutenues entre un longeron ou une rehausse de montant et l'autre par l'appui de leurs extrémités sur des étriers présents le long des bords des longerons ou des rehausses de montants.

Dans l'état actuel de la technique, les étriers sont soudés sur les longerons ou rehausses de montants, de sorte que, malheureusement, avec ce système, chaque série de longerons ou rehausses de montants ne convient donc que pour un seul type de rehaussement, c'est-à-dire pour un seul type de disposition horizontale des traverses ou lames.

Ceci implique que, lorsque les exigences de la charge transportée demandent d'augmenter la rigidité de l'entourage qui compose le rehaussement de la caisse, l'opérateur doit remplacer toute la série de longerons ou rehausses de montants par une autre série de longerons ou rehausses de montants munis d'un plus grand nombre d'étriers de soutien des traverses ou lames.

En pratique, chaque transporteur doit posséder en magasin plus d'une série de longerons ou de rehausses de montants afin de pouvoir adapter la caisse du véhicule aux diverses exigences de transport.

Le but de la présente invention est de réaliser une rehausse de montant qui permette de réaliser le rehaussement de la caisse de différentes façons, c'est-à-dire de pouvoir disposer les traverses ou lames horizontales plus ou moins serrées ou plus ou moins espacées du plateau, sans devoir à chaque fois remplacer toute la série des rehausses de montants.

Ceci est obtenu par les caractéristiques de la partie caractérisante de la revendication 1.

Les étriers de support des traverses ou lames sont rendus amovibles par rapport à la rehausse de montant de support et ancrés à celui-ci, de préférence par accrochage.

En pratique, les étriers de support des traverses ou lames sont constitués par des éléments en forme de boîte ou poches munis de crochets appropriés avec lesquels ils vont s'accrocher à des fentes correspondantes pratiquées sur le corps de la rehausse de montant.

Pour pouvoir positionner lesdites poches à toutes les hauteurs possibles, la rehausse de montant est munie, sur les flancs, d'une série de fentes à pas constant qui s'étendent sur toute sa longueur.

Finalement, l'invention prévoit un système qui empêche le décrochage accidentel de l'étrier de sa rehausse de montant et qui est réalisé au moyen d'un élément flexible appartenant à l'étrier, constitué, par exemple, par une languette saillante qui appartient au corps de celui-ci et qui s'encastre sur la rehausse de montant elle-même lorsque l'étrier est en position de travail.

Ces caractéristiques de l'invention ainsi que d'autres seront mieux mises en évidence au moyen de la description d'une forme possible de réalisation, donnée à seul titre d'exemple illustratif et non limitatif, avec l'aide des planches de dessin annexées, sur lesquelles :
la Fig. 1 (planche I) représente une vue en perspective d'un véhicule muni du rehaussement de caisse selon l'invention ;
la Fig. 2 montre une vue de détail, frontale et en coupe, de l'accrochage de la traverse à la rehausse de montant ;
la Fig. 3 représente une vue en plan, en coupe selon la ligne III-III de la Fig. 2, de l'accrochage ;
la Fig. 4 montre la vue frontale, en coupe selon la ligne IV-IV de la Fig. 6, de l'étrier de support de la traverse ou lame ;

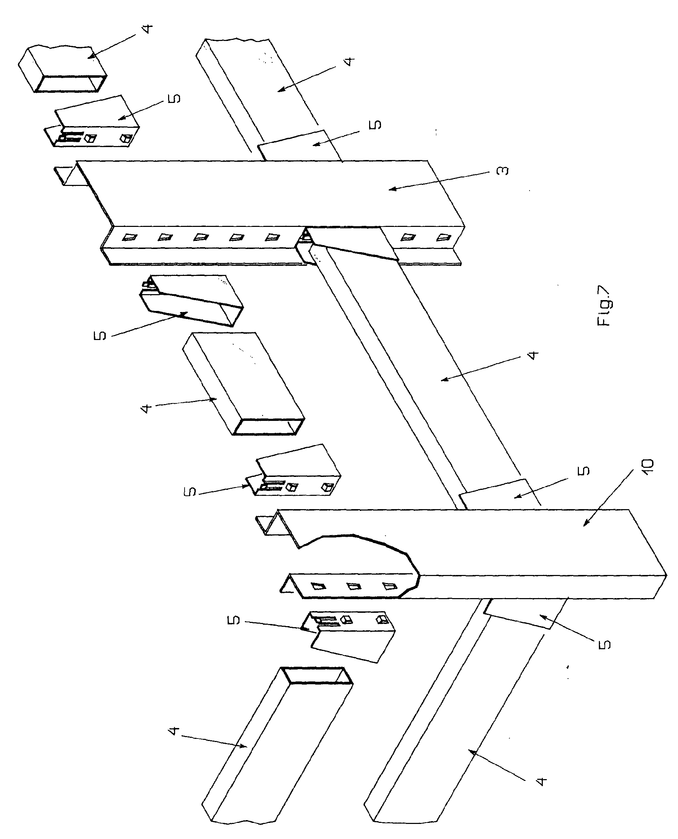

les Fig. 5, 6 représentent respectivement la vue en plan et la vue de côté de l'étrier selon la Fig. 4 ;
la Fig. 7 (planche II) représente une vue en perspective éclatée du système d'accrochage selon l'invention dans une rehausse de montant intermédiaire et dans une rehausse de montant d'angle.

Comme ceci est visible sur les Figures, la caisse 1 du véhicule est équipée d'un rehaussement 2 constitué par les rehausses de montants 3 qui soutiennent les traverses ou lames horizontales 4.

Les traverses ou lames horizontales 4 sont soutenues au moyen des étriers 5 qui s'ancrent aux rehausses de montants 3.

L'ancrage de l'étrier 5, sensiblement en forme de boîte, et de nature à former une poche, est du type à accrochage mobile et est réalisé au moyen des crochets 6 formés sur le corps dudit étrier et en saillie sur le dos de celui-ci, et qui, en position de travail, vont s'enfiler dans des fentes 7 pratiquées sur le flanc de la rehausse de montant 3, lesdites fentes étant présentes, avec un pas constant, sur une partie ou sur la totalité de la longueur de ladite rehausse de montant de manière à permettre aux étriers de s'accrocher dans une position verticale quelconque.

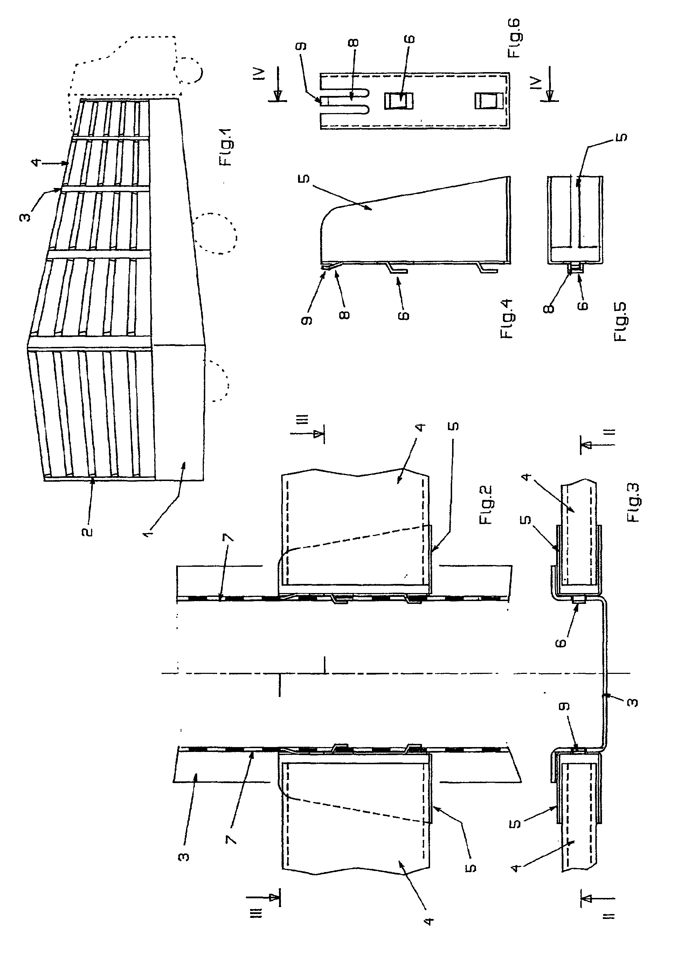

Chaque étrier 5 est muni d'une languette flexible 8, ayant sa partie supérieure 9 en saillie sur le corps, de manière que, lorsque ledit étrier est accroché, ladite partie saillante vienne s'insérer dans la fente 7 de la rehausse de montant et, plus précisément, vienne buter contre la partie supérieure de celle-ci (voir Fig. 2, 3), ce qui empêche l'étrier de se dégager par suite de brusques secousses accidentelles du véhicule.

Pour faciliter l'action d'accrochage de l'étrier à la rehausse de montant, il est prévu que les crochets 6 et/ou les fentes 7 présentent un profil à section convergente.

Comme cela est visible sur la Fig. 7, les étriers peuvent être accrochés indifféremment sur une rehausse de montant latérale 3 ou sur une rehausse de montant d'angle 10, ces rehausses de montants étant dotées de flancs munis de fentes.

Finalement, il est prévu que chaque étrier 5, muni de crochets 6 et d'une languette flexible 8, est obtenu à partir d'une unique feuille de tôle, par une simple opération de découpage et d'emboutissage, ce qui concourt à réduire davantage le coût de la structure.

Les avantages de l'invention ressortent clairement de ce qui est exposé plus haut, invention qui permet une grande rapidité de montage/démontage ou modification de la position des traverses ou lames 4.

## Revendications

1. Rehausse de montant pour le rehaussement de la caisse de camions, remorques et semi-remorques, destinée à s'ancrer, par sa partie inférieure, sur ladite caisse et apte à soutenir au moins une traverse ou lame horizontale, ladite rehausse comprenant au moins un étrier de support des traverses ou lames, **caractérisée en ce que** les étriers (5) de support des traverses ou lames (4) sont ancrés au corps de la rehausse de montant de façon amovible, au moyen d'un accrochage mobile.

2. Rehausse de montant pour le rehaussement de la caisse de camions, remorques et semi-remorques selon la revendication 1, **caractérisée par le fait que** les étriers (5) de support des traverses sont constitués par des éléments en forme de boîte ou poches munis de crochets appropriés (6) destinés à coopérer avec des fentes correspondantes (7) pratiquées sur le corps de la rehausse de montant.

3. Rehausse de montant pour le rehaussement de la caisse de camions, remorques et semi-remorques selon la revendication 2, **caractérisée par le fait que** le corps de la rehausse de montant est munie d'une série de fentes (7) sur les flancs.

4. Rehausse de montant pour le rehaussement de la caisse de camions, remorques et semi-remorques selon l'une des revendications 1 à 3, **caractérisée par le fait que** l'étrier comprend un élément flexible (8) apte à s'engager sur la rehausse de montant lorsque l'étrier précité est en position de travail, de manière à empêcher le décrochage accidentel de l'étrier par rapport au corps de rehausse de montant.

5. Rehausse de montant pour le rehaussement de la caisse de camions, remorques et semi-remorques selon une ou plusieurs des revendications précédentes, **caractérisée par le fait que** les crochets (6) sont pratiqués sur le corps de l'étrier et font saillie sur le dos de celui-ci.

6. Rehausse de montant pour le rehaussement de la caisse de camions, remorques et semi-remorques selon une ou plusieurs des revendications précédentes, **caractérisée par le fait que** les fentes (7) pratiquées sur les flancs de la rehausse de montant (3) sont présentes, avec un pas constant, sur toute la longueur de ladite rehausse de montant de manière à permettre aux étriers de pouvoir être accrochés dans une position verticale quelconque.

7. Rehausse de montant pour le rehaussement de la caisse de camions, remorques et semi-remorques selon une ou plusieurs des revendications précédentes, **caractérisée par le fait que** l'élément flexible (8) est une languette qui présente sa partie supérieure (9) en saillie sur le corps de l'étrier de manière que, lorsque ledit étrier est accroché, ladite partie en saillie vienne s'insérer dans la fente (7) de la rehausse de montant et, plus précisément, vienne buter contre la partie supérieure de celle-ci, en empêchant ainsi le dégagement de l'étrier par suite de brusques secousses accidentelles du véhicule.

8. Rehausse de montant pour le rehaussement de la caisse de camions, remorques et semi-remorques selon une ou plusieurs des revendications précédentes, **caractérisée par le fait que** les crochets (6) et/ou les fentes (7) présentent un profil à section convergente.

9. Rehausse de montant pour le rehaussement de la caisse de camions, remorques et semi-remorques selon une ou plusieurs des revendications précédentes, **caractérisée par le fait que** chaque étrier (5), muni de crochets (6) et d'une languette flexible (8) est obtenu à partir d'une seule feuille de tôle, par une simple opération de découpage et emboutissage.

10. Rehausse de montant pour le rehaussement de la caisse de camions, remorques et semi-remorques selon une ou plusieurs des revendications précédentes, **caractérisée par le fait que** les fentes (7) peuvent être aussi formées sur des rehausses de montants de production normale aussi bien latérales que d'angle.
